# EUROPEAN PATENT SPECIFICATION

(11) **EP 3 531 197 B1**
(45) Date of publication and mention of the grant of the patent: **13.01.2021**
(21) Application number: 19155290.0
(22) Date of filing: 04.02.2019
(51) Int. Cl.: G02F 1/11

(54) **CONTROL SYSTEM INCLUDING A BEAM STABILIZER AND A PHASE MODULATION CAPABLE ACOUSTO-OPTIC MODULATOR FOR DIVERTING LASER OUTPUT INTENSITY NOISE TO A FIRST ORDER LASER LIGHT BEAM AND RELATED METHODS**
STEUERUNGSSYSTEM MIT EINEM STRAHLSTABILISATOR UND EINEM PHASENMODULIERBAREN AKUSTO-OPTISCHEN MODULATOR ZUM ABLENKEN VON LASERAUSGANGSINTENSITÄTSRAUSCHEN AUF EINEN LASERLICHTSTRAHL ERSTER ORDNUNG UND ZUGEHÖRIGE VERFAHREN
SYSTÈME DE COMMANDE COMPRENANT UN STABILISATEUR DE FAISCEAU ET UN MODULATEUR ACOUSTO-OPTIQUE CAPABLE DE MODULATION DE PHASE POUR DÉVIER LE BRUIT D'INTENSITÉ DE SORTIE LASER VERS UN FAISCEAU DE LUMIÈRE LASER DE PREMIER ORDRE ET PROCÉDÉS ASSOCIÉS

(30) Priority: 21.02.2018 US 201815900936
(43) Date of publication of application: 28.08.2019
(73) Proprietor: Harris Corporation, Melbourne, Florida 32919 (US)
(72) Inventor: Morse, Randall K., Palm Bay, FL 32907 (US); Wasilousky, Peter Alan, Indialantic, FL 32903 (US); Burberry, Lee M., West Melbourne, FL 32904 (US); Lange, Michael R., Melbourne, FL 32934 (US); Logan, Catheryn D., Melbourne, FL 32935 (US); Corey, Christopher A., Palm Bay, FL 32907 (US)
(74) Representative: Schmidt, Steffen J.

(56) References cited:
- US-A- 4 672 192
- US-A- 4 873 435
- US-A- 5 576 880
- US-A- 5 689 331
- US-B2- 7 518 779

## Description

### Related Applications

This application is a continuation in part of application serial no. 15/342,372 filed November 3, , 2016.

### Technical Field

The present invention relates to the field of optical devices, and, more particularly, to acousto-optic modulators for lasers and related methods.

### Background

Acousto-optic modulators, sometimes referred to as Bragg cells, diffract and shift light using sound waves at radio frequency. These devices are often used for Q-switching, signal modulation in telecommunications systems, laser scanning and beam intensity control, frequency shifting, and wavelength filtering in spectroscopy systems. Many other applications lend themselves to using acousto-optic devices.

In such acousto-optic devices, a piezoelectric transducer, sometimes also referred to as an RF transducer, is secured to an acousto-optic bulk medium as a transparent optical material, for example, fused silica, quartz or similar glass material. An electric RF signal oscillates and drives the transducer to vibrate and create sound waves within the transparent medium which affect the properties of an optical field in the medium via the photo elastic effect, in which a modulating strain field of an ultrasonic wave is coupled to an index of refraction for the acousto-optic bulk medium. As a result, the refractive index change in amplitude is proportional to that of sound.

The index of refraction is changed by moving periodic planes of expansion and compression in the acousto-optic bulk material. Incoming light scatters because of the resulting periodic index modulation and interference, similar to Bragg diffraction.

Acousto-optic modulators are preferred in many applications because they are faster than tiltable mirrors and other mechanical devices. The time it takes for the acousto-optic modulator to shift an exiting optical beam is limited to the transit time of the sound wave. The acousto-optic modulators are often used in Q-switches where a laser produces a pulsed output beam at high peak power, typically in the Kilowatt range. This output could be higher than lasers operating a continuous wave (CW) or constant output mode.

Examples of acousto-optic modulator devices and similar acousto-optic systems are disclosed in commonly assigned U.S. Pat. Nos. 4,256,362; 5,923,460; 6,320,989; 6,487,324; 6,538,690; 6,765,709; and 6,870,658.

Some applications using acousto-optic devices modulate the intensity of an optical beam. This modulation may create small deviations in the output angle of the diffracted beam because of the local thermal transients introduced when the RF modulation waveform to the device is turned ON and OFF. These thermal transients may negatively impact the resolution and location of the focused spot, which may be produced. One advantageous approach which may be used to help enhance the resolution of acousto-optic devices is set forth in U.S. Pat. No. 7,538,929 to Wasilousky, which is assigned to the present Applicant. Wasilousky discloses an acousto-optic modulator which includes an acousto-optic bulk medium and transducer attached to the acousto-optic bulk medium and formed as a linear array of electrodes. A transducer driver is connected to each electrode and is coherently phase driven to alter the angular momentum distribution of an acoustic field and alternately allow and inhibit phase matching between the optical and acoustic field and produce a desired intensity modulation of an optical wavefront.

Despite the existence of such configurations, further advancements in laser systems using acousto-optic modulators may be desirable in certain applications.

US 4,672,192 A discloses a laser beam noise reducing apparatus including an acoustooptic cell which receives a noisy input laser light beam and produces an undiffracted or zero-order light beam and a diffracted beam in response to an RF signal at a predetermined frequency. The zero-order beam is applied to a utilization device which produces an information modulated output beam at an image zone. The zero-order beam at the output of the acoustooptic cell is sampled and AC and DC component signals are produced which are functions of fast and slow time varying changes, respectively, in the intensity of the zero-order beam. The output beam from the utilization device is sampled when it is unmodulated and a DC reference signal which represents the intensity of the DC component at the image zone is produced. The AC and DC component signals and the reference signal are combined and used to control the amplitude of the RF signal to reduce noise in the beam at the image zone. This document discloses a system according to the preamble of claim 1.

### Summary

A laser system may include a laser source configured to generate a laser light beam, a beam stabilizer downstream from the laser light source, and an acousto-optic modulator (AOM). The AOM may include an acousto-optic medium configured to receive the laser light beam, and a phased array transducer comprising a plurality of electrodes coupled to the acousto-optic medium and configured to cause the acousto-optic medium to output a zero order laser light beam and a first order diffracted laser light beam. The system may further include a beamsplitter downstream from the AOM and configured to split a sampled laser light beam from the zero order laser light beam, a photodetector configured to receive the sampled laser light beam and generate a feedback signal associated therewith, and a radio frequency (RF) driver configured to generate an RF drive signal to the phased array transducer electrodes so that noise is diverted to the first order diffracted laser light beam based upon the feedback signal.

By way of example, the beam stabilizer may be configured to correct an angular displacement and/or a positional displacement of the laser light beam into the AOM. More particularly, the beam stabilizer may include a position mirror optically aligned with the laser light beam from the laser source, a servo motor configured to move the position mirror, a position sensor configured to measure a positional displacement of the laser light beam, and a servo controller coupled to the servo motor and configured to actuate the servo motor to stabilize the laser light beam based upon the position sensor. Similarly, the beam stabilizer may also include an angle mirror optically aligned with the laser light beam from the laser source, a servo motor configured to move the angle mirror, an angle sensor configured to measure an angular displacement of the laser light beam, and a servo controller coupled to the servo motor and configured to actuate the servo motor to stabilize the laser light beam based upon the angle sensor.

In accordance with another example, the beam stabilizer may include a position mirror optically aligned with the zero order laser light beam from the acousto-optic medium, a servo motor configured to move the position mirror, a position sensor configured to measure a positional displacement of the zero order laser light beam, and a servo controller coupled to the servo motor and configured to actuate the servo motor to stabilize the zero order laser light beam based upon the position sensor. Similarly, beam stabilizer may also include an angle mirror optically aligned with the zero order laser light beam from the acousto-optic medium, a servo motor configured to move the angle mirror, an angle sensor configured to measure an angular displacement of the zero order laser light beam, and a servo controller coupled to the servo motor and configured to actuate the servo motor to stabilize the zero order laser light beam based upon the angle sensor.

Furthermore, the RF driver may be configured to drive alternating electrodes of the phased array transducer electrodes with different phases. Moreover, an RF power level associated with the RF drive signal may have a constant power. In addition, the laser system may also include an ion trap, and the beamsplitter may be configured to direct the zero order laser light beam from the AOM to the ion trap.

A related method may include generating a laser light beam using a laser source, stabilizing the laser light beam using a beam stabilizer downstream from the laser light source, and causing an acousto-optic medium to output a zero order laser light beam from the stabilized laser light beam using a phased array transducer comprising a plurality of electrodes coupled to the acousto-optic medium. The method may further include splitting a sampled laser light beam from the zero order laser light beam using a beamsplitter downstream from the acousto-optic medium, generating a feedback signal associated with the sampled laser light beam using a photodetector, and generating a radio frequency (RF) drive signal for the phased array transducer electrodes with an RF driver so that noise is diverted to the first order diffracted laser light beam based upon the feedback signal.

Another related method may include generating a laser light beam using a laser source, causing an acousto-optic medium to output a zero order laser light beam from the laser light beam using a phased array transducer comprising a plurality of electrodes coupled to the acousto-optic medium, and stabilizing the zero order laser light beam using a beam stabilizer downstream from the acousto-optic medium. The method may further include splitting a sampled laser light beam from the stabilized zero order laser light beam using a beamsplitter downstream from the acousto-optic medium, generating a feedback signal associated with the sampled laser light beam using a photodetector, and generating a radio frequency (RF) drive signal for the phased array transducer electrodes with an RF driver so that noise is diverted to the first order diffracted laser light beam based upon the feedback signal.

### Brief Description of the Drawings

FIG. 1 is a schematic block diagram of a laser system including a phase-capable acousto-optic modulator (AOM) in accordance with an example embodiment.
FIGS. 2 and 3 are schematic circuit diagrams illustrating different electrode connection configurations and associated driving signals therefor which may be used with the systems of FIGS. 1-3.
FIG. 4 is a flow diagram illustrating method aspects associated with the system of FIG. 1.
FIGS. 5-7 are schematic block diagrams of different example implementations of the laser system of FIG. 1 further including respective laser light beam stabilizer configurations.
FIG. 8 is a flow diagram illustrating method aspects associated with the systems of FIGS. 5-6.
FIG. 9 is a flow diagram illustrating method aspects associated with the system of FIG. 7.

### Detailed Description of the Embodiments

The present description is made with reference to the accompanying drawings, in which exemplary embodiments are shown. However, many different embodiments may be used, and thus the description should not be construed as limited to the particular embodiments set forth herein. Rather, these embodiments are provided so that this disclosure will be thorough and complete. Like numbers refer to like elements throughout, and prime and multiple prime notation are used to indicate similar elements or steps in different embodiments.

By way of background, excessive noise levels from laser sources in optical illumination systems generate instabilities and errors. In particular, systems that manipulate the quantum states of particles, atoms and electrons, typically require extreme stability. Beam pointing errors correlate to noise in quantum state manipulation systems. Moreover, beam pointing stability due to thermal transients in the bulk material of active acousto-optic devices in an optical illumination system affect many applications, but especially those designed for quantum state illumination.

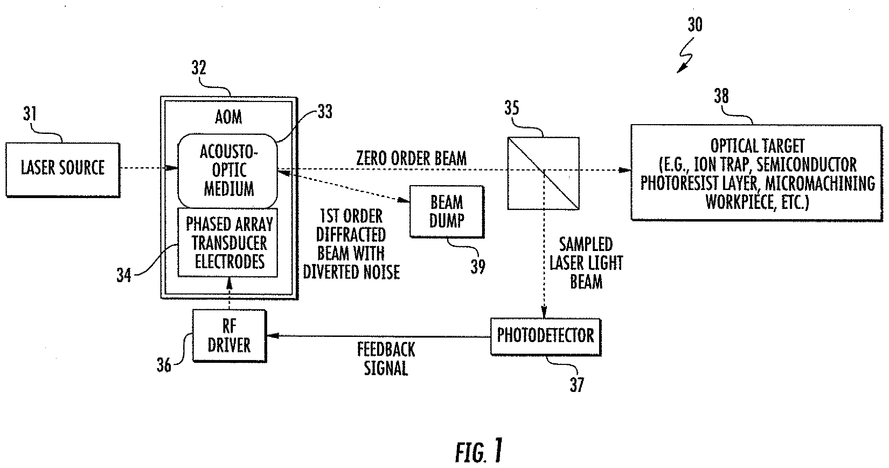

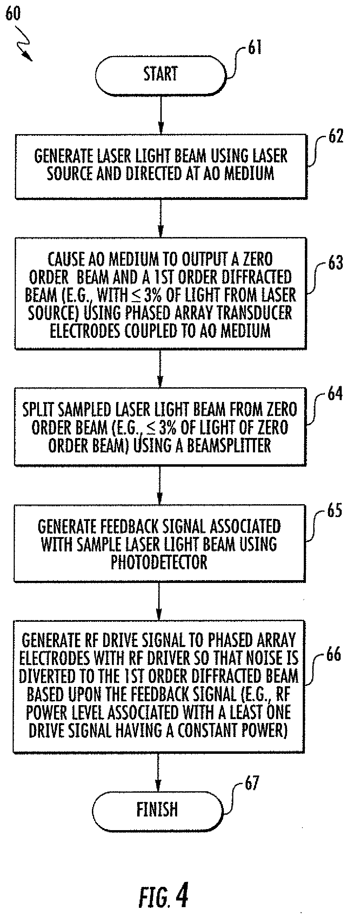

Referring initially to FIGS. 1 and 4, a laser system **30** and associated method aspects which may provide enhanced stability and noise reduction are first described. Beginning at Block **61** of the flow diagram **60,** the laser system **30** illustratively includes a laser source **31** configured to generate a laser light beam, at Block **62.** In accordance with one example embodiment, a Paladin Advanced 355nm mode locked UV laser source from Coherent, Inc. of Santa Clara, CA may be used, although other suitable laser sources may also be used in different embodiments. The system **30** further illustratively includes an acousto-optic modulator (AOM) **32.** The AOM illustratively includes an acousto-optic medium **33** configured to receive the laser light beam from the laser source **31,** and a phased array of electrodes **34** coupled to the acousto-optic medium. The acousto-optic medium **33** may include a piezoelectric transducer and bulk acousto-optic medium (e.g., silica, quartz, glass, etc.), as discussed above. The phased array of electrodes **34** are configured to cause the acousto-optic medium **33** to output a zero order laser light beam to an optical target **38,** and a first order diffracted laser light beam, at Block **63,** as will be discussed further below.

The system further illustratively includes a beamsplitter **35** downstream from the AOM **32** which is configured to split a sampled laser light beam from the zero order laser light beam, at Block **64.** The beamsplitter **35** need only divert a small portion of light from the zero order laser light beam into the sampled laser light beam (e.g., ≤ 3%) to provide adequate feedback to a radio frequency (RF) driver **36** for driving the phase array of electrodes **34.** More particularly, a photodetector **37** is configured to receive the sampled laser light beam and generate an electrical feedback signal for the RF driver **36** based upon the sampled laser light beam. As such, the RF driver **36** is able to generate one or more RF drive signals to the phased array of electrodes **34** to generate the zero order beam and the first order diffracted beam accordingly, which illustratively concludes the method of FIG. 4 (Block **67**).

In particular, the RF driver **36** drives the phased array of electrodes **34** such that noise measured from the feedback signal is diverted to the first order diffracted laser light beam, which may be directed to a beam dump **39** (or simply away from the optical target **38**). This advantageously provides noise cancelation by diffracting a relatively small amount of light from the zero order beam (e.g., ≤ 3%) into the first order diffracted beam by changing the phase of the RF drive signal to alternating electrode elements of the phased array of electrodes **34.** In particular, the feedback signal is inverted and sent to the phase modulation capable AOM **32** to subtract and correct for the inherent noise in the laser.

This may be done while the RF power applied to the acousto-optic medium **33** remains essentially constant which helps to eliminate beam pointing errors which may otherwise be associated with varying thermal transients due to changing RF power levels, as may be experienced with typical amplitude modulation AOMs, for example. Stated alternatively, by only effecting the phase of the RF drive signal to the N element phased array electrode pattern on the AOM and leaving the RF power level essentially constant, this advantageously reduces the laser intensity noise appearing on the zero order beam while still retaining a positionally stable beam.

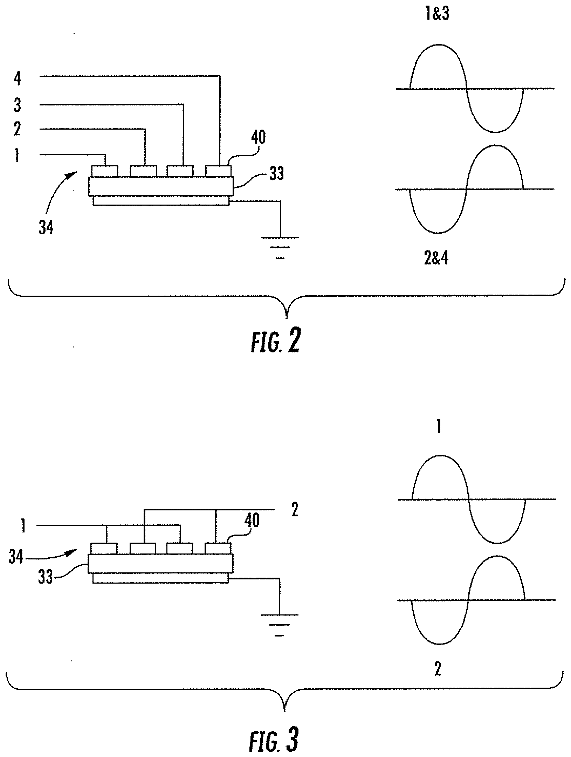

More particularly, referring additionally to FIGS. 2 and 3, two example configurations for driving alternating electrodes **40** of the phased array of electrodes **34** with different phases to provide the zero and first order beam configuration described above are now described. In the first configuration (FIG. 2), the first and third driving signals (shown on the right hand side of FIG. 2) provided to corresponding odd numbered electrodes are 180° out of phase with the second and fourth driving signals provided to corresponding even numbered electrodes. In the second configuration (FIG. 3), first and second drive signals are respectively connected to odd and even electrodes in an interdigitated fashion as shown, and as before these drive signals are 180° out of phase to one another. In this way, directly adjacent electrodes are driven at opposite phases to one another. However, it should be noted that the RF drive signals need not always be 180° out of phase, i.e., they may be somewhere between 0° and 180° to vary the level of phase matching occurring in the AO diffraction process, thereby selectively altering the amount of light directed from the zero order beam into the first order beam.

The system **30** accordingly combines intensity modulation via RF-phase variation on a phased array transducer with active optical feedback to accomplish noise cancelation in an optical illumination system. Moreover, performing phase modulation by flipping the phase of alternating elements of a multi-element phased array has inherently better pointing stability because the RF power applied to the device remains essentially constant, as noted above. Further, applying this to the zero order beam allows the RF power to remain low, reducing the potential of thermal gradients and thermal transients.

The system **30** may accordingly provide advantages with respect to numerous different types of optical targets. By way of example, in one configuration the optical target **38** may be an ion trap, such as in a quantum computing device. In accordance with another example, the optical target **38** may be a semiconductor workpiece to perform photolithographic patterning of a photoresist layer, for example. In still another example, the optical target **38** may be a micromachining workpiece. It should be noted that the laser system **30** may be used with other optical targets in different embodiments as well.

Other example systems in which the above-described stability and noise reduction techniques may be used are set forth in the following co-pending applications: U.S. Patent 9 958 711 B1 filed November 3, 2016, entitled MULTI-CHANNEL LASER SYSTEM INCLUDING AN ACOUSTO-OPTIC MODULATOR (AOM) AND RELATED METHODS; and U.S. Patent 9 915 851 B1 filed November 3, 2016, entitled MULTI-CHANNEL ACOUSTO-OPTIC MODULATOR (AOM) AND RELATED METHODS. Both of these applications are assigned to the present Applicant Harris Corporation

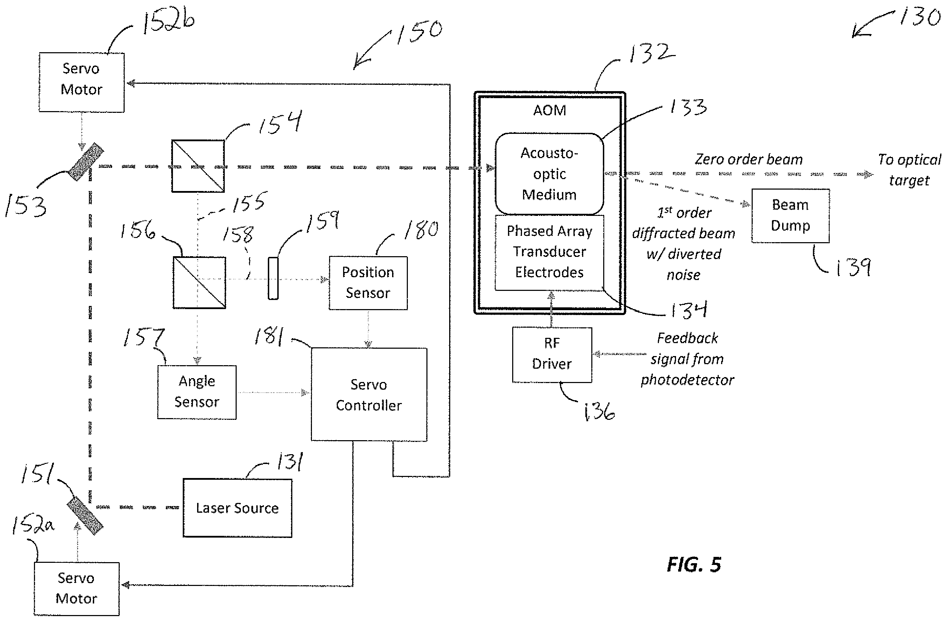

Turning now to FIGS. 5-6 and 8, another example implementation of a laser system **130** illustratively includes a beam stabilizer **150** to help address "wandering" of the laser light beam from the laser source **131** which tends to occur over time. In the illustrated example, the laser source **131,** AOM **132,** acousto-optic medium **133,** phased array transducer electrodes **134,** RF driver **136,** and beam dump **139** are similar to the elements **31, 32, 33, 34, 36,** and **39** described above, respectively. Furthermore, it should be noted that counterparts of the beamsplitter **35,** photodetector **37,** and optical targets would also be present in the system **130** as described above and shown in FIG. 1, but they are omitted from FIGS. 5-7 for clarity of illustration of the beam stabilizer components.

In the present example, the beam stabilizer **150** is configured to correct an angular displacement and a positional displacement of the laser light beam from the laser source **131** (although both positional and angular displacement need not be corrected in all embodiments). More particularly, the beam stabilizer **150** illustratively includes a position mirror **151** optically aligned with the laser light beam from the laser source **131,** a servo motor **152a** configured to move the position mirror, an angle mirror **153** optically aligned with the position mirror to redirect the laser light beam therefrom to the acousto-optic medium **133,** and a servo motor **152b** configured to move the angle mirror.

Furthermore, a beamsplitter **154** is positioned in the optical path between the angle mirror **153** and the acousto-optic medium **133** downstream from the angle mirror and configured to split a sampled laser light beam **155** from the original laser light beam from the laser source **131,** and direct this sampled laser light beam to an angle sensor **157.** Furthermore, in the illustrated example another beamsplitter **156** is positioned in the optical path of the sampled laser light beam **155** between the beamsplitter **154** and the angle sensor **157** to split off another sampled laser light beam **158** which is directed through a lens **159** to image the angle mirror to a position sensor **180.** The angle sensor **157** is configured to measure an angular displacement of the laser light beam from the laser source, and the position sensor **180** is configured to measure a positional displacement of the laser light beam from the laser source **131.** These measurements are provided to a servo controller **181,** which in turn controls or actuates the servo motors **152a, 152b** to correct the positional and angular displacements caused by drift or wandering of the laser light beam at the laser source **131.**

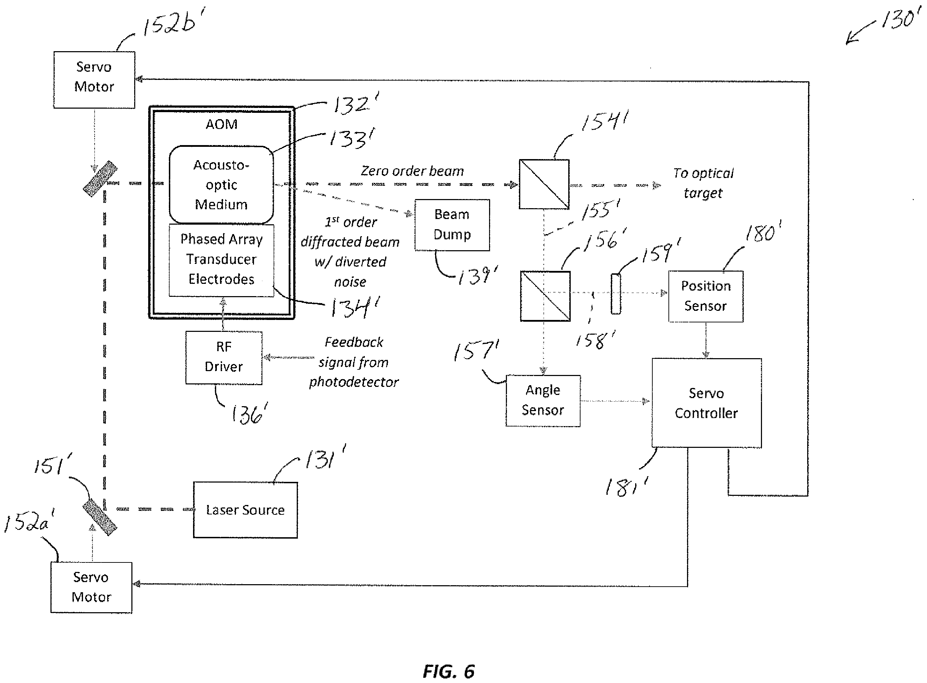

In accordance with another example of the system **130'** now described with reference to FIG. 6, portions of the beam stabilizer **150'** are positioned both upstream and downstream from the AOM **132',** rather than all upstream as in the system **130.** In this example, the position mirror **151'** and **153'** remain upstream from the AOM **132',** but the beamsplitters **154', 155',** angle sensor **157',** and position sensor **180',** are downstream of the AOM, meaning they are splitting/measuring the zero order beam exiting the acousto-optic medium **133',** as opposed to the laser light beam from the laser source **131'** as in the system **130.** Nevertheless, the servo controller **181'** still causes the servo motors **152a', 152b'** to adjust the position mirror **151'** and angle mirror **153'** to perform beam correction to the laser light beam exiting the laser source **131'** as noted above.

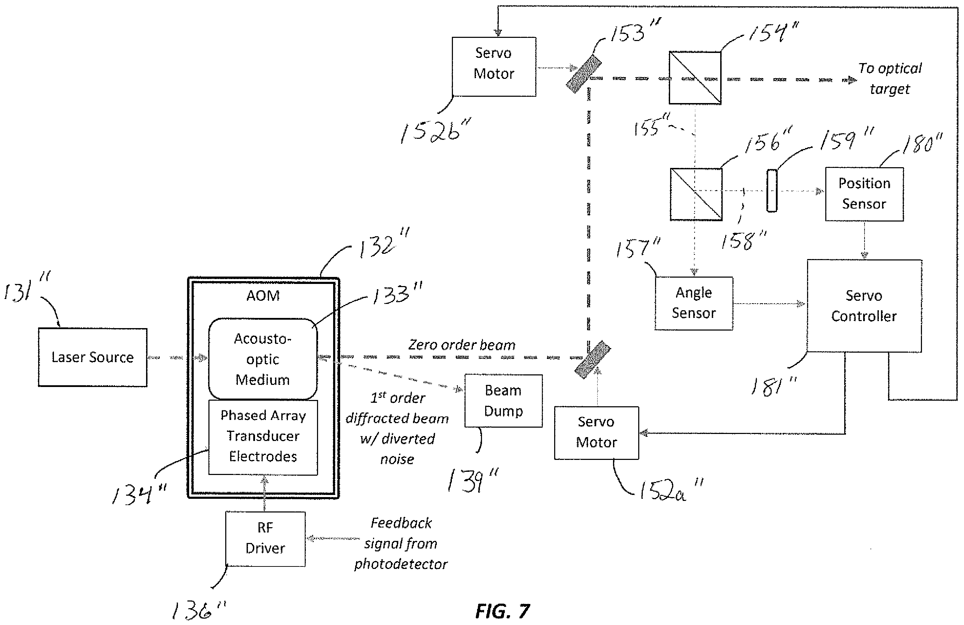

Still another example implementation is now described with reference to FIG. 7. In this embodiment, the beam stabilizer **150ʺ** is downstream from the AOM **132ʺ**, including the position mirror **151ʺ** and the angle mirror **153ʺ**. As such, the mirrors **151ʺ, 153ʺ** are directing, and the beamsplitters **154', 155',** angle sensor **157',** and position sensor **180',** are splitting/measuring, the zero order beam exiting the acousto-optic medium **133'.** Moreover, the corrections performed by the servo motor(s) **152ʺ** and position mirror **151ʺ** are to the zero order beam, not the laser light beam from the laser source **131ʺ** as in the preceding two embodiments. All of the systems **130, 130', 130ʺ** may advantageously be used to correct positional and/or angular displacement, and the choice of which one to implement may depend on the particular application, space constraints, and other considerations that will be appreciated by those skilled in the art.

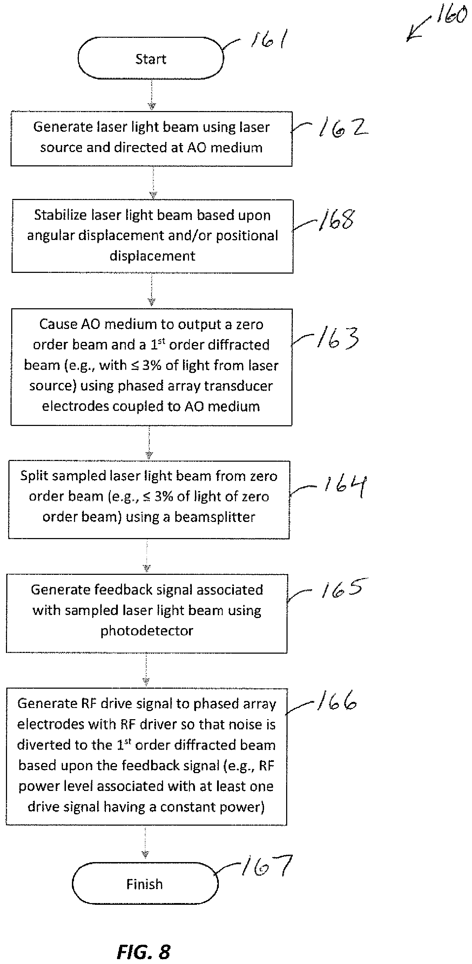

Related method aspects corresponding to the systems **130, 130'** are now described with reference to the flow diagram **160** of FIG. 8. In the illustrated example, the steps illustrated at Blocks **161-167** are similar to those discussed above with reference to Blocks **61-67** of FIG. 4 above. However, the illustrated method further includes a step of stabilizing the laser light beam from the laser light source **131, 131'** using the beam stabilizer **150** or **150'** based upon angular displacement and/or positional displacement, at Block **168,** as discussed further above.

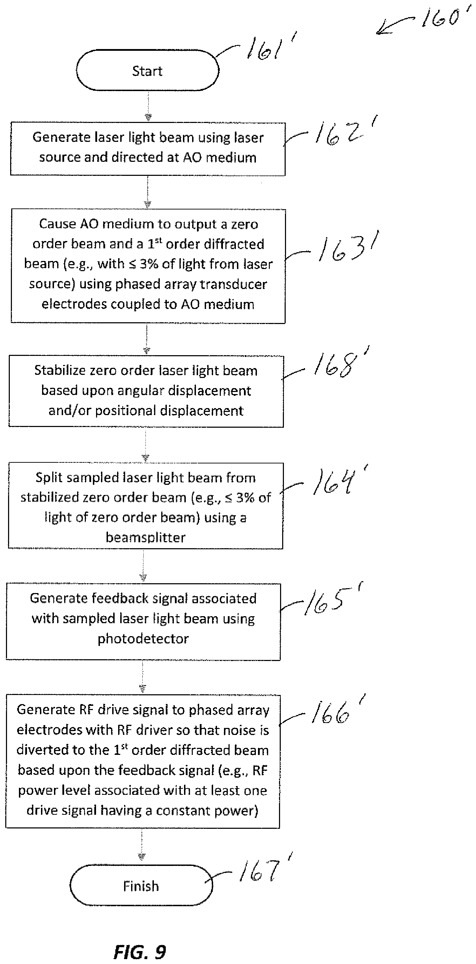

Still further method aspects corresponding to the system **130ʺ** are now described with reference to the flow diagram **160'** of FIG. 9. In the illustrated example, the steps illustrated at Blocks **161'-167'** are similar to those discussed above with reference to Blocks **61-67** of FIG. 4 above. However, the illustrated method further includes a step of stabilizing the zero order laser light beam from the acousto-optic medium **133ʺ** using the beam stabilizer **150ʺ** based upon angular displacement and/or positional displacement, at Block **168',** as discussed further above.

Many modifications and other embodiments will come to the mind of one skilled in the art having the benefit of the teachings presented in the foregoing descriptions and the associated drawings. Therefore, it is understood that the disclosure is not to be limited to the specific embodiments disclosed

## Claims

1. A laser system (30; 130; 130') comprising:
a laser source (31; 131; 131'; 131") configured to generate a laser light beam;
an acousto-optic modulator (32; 132; 132'; 132ʺ), AOM, comprising
an acousto-optic medium (33; 133; 133'; 133ʺ) configured to receive the laser light beam, and
a transducer configured to cause the acousto-optic medium (33; 133; 133'; 133") to output a zero order laser light beam and a first order diffracted laser light beam;
a beamsplitter (35; 154'; 154") downstream from the AOM (32; 132; 132'; 132") and configured to split a sampled laser light beam from the zero order laser light beam;
a photodetector (37) configured to receive the sampled laser light beam and generate a feedback signal associated therewith; and
a radio frequency, RF, driver (36; 136; 136'; 136") configured to generate an RF drive signal to the transducer so that noise is diverted to the first order diffracted laser light beam based upon the feedback signal, **characterized in that** the laser system (30; 130; 130') further comprises a beam stabilizer (150; 150'; 150") downstream from the laser light source (31; 131; 131'; 131"), wherein the transducer is a phased array transducer comprising a plurality of electrodes (34; 134; 134'; 134") coupled to the acousto-optic medium (33; 133; 133'; 133") and the radio frequency driver (36; 136; 136'; 136") is configured to generate the RF drive signal to the phased array transducer electrodes (34; 134; 134'; 134"), wherein the beam stabilizer (150; 150'; 150") comprises:
a position mirror (151; 151'; 151") optically aligned with the laser light beam from the laser source (31; 131; 131'; 131");
a first servo motor (152a; 152a'; 152a") configured to move the position mirror (151; 151'; 151ʺ);
a position sensor (180; 180'; 180") configured to measure a positional displacement of the laser light beam;
a servo controller (181; 181'; 181") coupled to the first servo motor (152a; 152a'; 152a") and configured to actuate the first servo motor (152a; 152a'; 152a") to stabilize the laser light beam based upon the position sensor (180; 180'; 180");
an angle mirror (153; 153'; 153") optically aligned with the laser light beam from the laser source (31; 131; 131'; 131");
a second servo motor (152b; 152b'; 152b") configured to move the angle mirror (153; 153'; 153ʺ); and
an angle sensor (157; 157'; 157") configured to measure an angular displacement of the laser light beam,
wherein the servo controller (181; 181'; 181") is coupled to the second servo motor (152b; 152b'; 152b") and configured to actuate the second servo motor (152b; 152b'; 152b") to stabilize the laser light beam based upon the angle sensor (157; 157'; 157"),
wherein the beam stabilizer (150; 150'; 150") is configured to correct a positional displacement of the laser light beam and to correct an angular displacement of the laser light beam.

2. The laser system (30; 130; 130') of claim 1, wherein the RF driver (36; 136; 136'; 136") is configured to drive alternating electrodes of the phased array transducer electrodes (34; 134; 134'; 134") with different phases.

3. A method comprising:
generating a laser light beam using a laser source (31; 131; 131'; 131ʺ) ;
causing an acousto-optic medium (32; 132; 132'; 132") to output a zero order laser light beam from the stabilized laser light beam using a transducer;
splitting a sampled laser light beam from the zero order laser light beam using a beamsplitter downstream from the acousto-optic medium;
generating a feedback signal associated with the sampled laser light beam using a photodetector (37); and
generating a radio frequency, RF, drive signal for the transducer with an RF driver (36; 136; 136'; 136") so that noise is diverted to the first order diffracted laser light beam based upon the feedback signal, **characterized by**:
stabilizing the laser light beam using a beam stabilizer downstream from the laser light source (31; 131; 131'; 131"), wherein the transducer is a phased array transducer comprising a plurality of electrodes (34; 134; 134'; 134") coupled to the acousto-optic medium (32; 132; 132'; 132") and wherein the radio frequency drive signal is generated for the phased array transducer electrodes (34; 134; 134'; 134"), wherein stabilizing is performed by a beam stabilizer (150; 150'; 150ʺ) comprising:
a position mirror (151; 151'; 151") optically aligned with the laser light beam from the laser source (31; 131; 131'; 131");
a position sensor (180; 180' 180");
a first servo motor (152a; 152a'; 152a");
an angle mirror (153; 153'; 153") optically aligned with the laser light beam from the laser source (31; 131; 131'; 131");
an angle sensor (157; 157'; 157");
a second servo motor (152b; 152b'; 152b"); and
a servo controller (181; 181'; 181"),
wherein stabilizing comprises:
moving, by the first servo motor (152a; 152a'; 152a"), the position mirror (151; 151'; 151");
measuring, by the position sensor (180; 180' 180"), a positional displacement of the laser light beam;
actuating, by the servo controller (181; 181'; 181ʺ) coupled to the first servo motor (152a; 152a'; 152a"), the first servo motor (152a; 152a'; 152a") to stabilize the laser light beam based upon the position sensor (180; 180' 180ʺ);
moving, by the second servo motor (152b; 152b'; 152b"), the angle mirror;
measuring, by the angle sensor (157; 157'; 157ʺ), an angular displacement of the laser light beam; and
actuating, by the servo controller (181; 181'; 181") coupled to the second servo motor (152b; 152b'; 152bʺ), the second servo motor (152b; 152b'; 152b") to stabilize the laser light beam based upon the angle sensor (157; 157'; 157"),
wherein stabilizing comprises stabilizing an angular displacement of the laser light beam and a positional displacement of the laser light beam.

4. The method of claim 3, wherein causing comprises driving alternating electrodes of the phased array transducer electrodes (34; 134; 134'; 134") with different phases.

## Patentansprüche

1. Lasersystem (30; 130; 130ʹ) umfassend:
eine Laserquelle (31; 131; 131'; 131"), die eingerichtet ist, um einen Laserlichtstrahl zu erzeugen;
einen akusto-optischen Modulator (32; 132; 132'; 132"), AOM, umfassend ein akusto-optisches Medium (33; 133; 133'; 133"), das eingerichtet ist, um den Laserlichtstrahl zu empfangen, und
einen Wandler, der eingerichtet ist, um zu bewirken, dass das akusto-optische Medium (33; 133; 133'; 133") einen Laserlichtstrahl nullter Ordnung und einen gebeugten Laserlichtstrahl erster Ordnung ausgibt;
einen Strahlteiler (35; 154'; 154"), der stromabwärts des AOM (32; 132; 132'; 132") ist und eingerichtet ist, um einen abgetasteten Laserlichtstrahl vom Laserlichtstrahl nullter Ordnung zu trennen;
einen Fotodetektor (37), der eingerichtet ist, um den abgetasteten Laserlichtstrahl zu empfangen und ein diesem zugeordnetes Rückkopplungssignal zu erzeugen; und
einen Funkfrequenz-, RF, Treiber (36; 136; 136'; 136"), der eingerichtet ist, um ein RF-Steuersignal für den Wandler zu erzeugen, so dass Rauschen basierend auf dem Rückkopplungssignal auf den gebeugten Laserlichtstrahl erster Ordnung umgeleitet wird,
**dadurch gekennzeichnet, dass** das Lasersystem (30; 130; 130') ferner einen Strahlstabilisator (150; 150'; 150") stromabwärts der Laserlichtquelle (31; 131; 131'; 131") umfasst, wobei der Wandler ein Phased-Array-Wandler ist, der eine Mehrzahl von Elektroden (34; 134; 134'; 134") umfasst, die mit dem akusto-optischen Medium (33; 133; 133'; 133") gekoppelt sind, und der Funkfrequenztreiber (36; 136; 136'; 136") eingerichtet ist, um das RF-Steuersignal für die Phased-Array-Wandlerelektroden (34; 134; 134'; 134") zu erzeugen, wobei der Strahlstabilisator (150; 150'; 150") umfasst:
einen Positionsspiegel (151; 151'; 151"), der optisch mit dem Laserlichtstrahl von der Laserquelle (31; 131; 131'; 131") ausgerichtet ist;
einen ersten Servomotor (152a; 152a'; 152a"), der eingerichtet ist, um den Positionsspiegel (151; 151'; 151") zu bewegen;
einen Positionssensor (180; 180'; 180"), der eingerichtet ist, um eine Positionsverschiebung des Laserlichtstrahls zu messen;
eine Servosteuerung (181; 181'; 181"), die mit dem ersten Servomotor (152a; 152a'; 152a") gekoppelt ist und eingerichtet ist, um den ersten Servomotor (152a; 152a'; 152a") zum Stabilisieren des Laserlichtstrahls basierend auf dem Positionssensor (180; 180'; 180") zu betätigen;
einen Winkelspiegel (153; 153'; 153"), der optisch mit dem Laserlichtstrahl von der Laserquelle (31; 131; 131'; 131") ausgerichtet ist;
einen zweiten Servomotor (152b; 152b'; 152b"), der eingerichtet ist, um den Winkelspiegel (153; 153'; 153") zu bewegen; und
einen Winkelsensor (157; 157'; 157"), der eingerichtet ist, um eine Winkelverschiebung des Laserlichtstrahls zu messen,
wobei die Servosteuerung (181; 181'; 181") mit dem zweiten Servomotor (152b; 152b'; 152b") gekoppelt ist und eingerichtet ist, um den zweiten Servomotor (152b; 152b'; 152b") zum Stabilisieren des Laserlichtstrahls basierend auf dem Winkelsensor (157; 157'; 157") zu betätigen,
wobei der Strahlstabilisator (150; 150'; 150") eingerichtet ist, um eine Positionsverschiebung des Laserlichtstrahls und eine Winkelverschiebung des Laserlichtstrahls zu korrigieren.

2. Lasersystem (30; 130; 130') nach Anspruch 1, wobei der RF-Treiber (36; 136; 136'; 136") eingerichtet ist, um alternierende Elektroden der Phased-Array-Wandlerelektroden (34; 134; 134'; 134") mit verschiedenen Phasen anzusteuern.

3. Verfahren umfassend:
Erzeugen eines Laserlichtstrahls unter Verwendung einer Laserquelle (31; 131; 131'; 132");
Bewirken, dass ein akusto-optisches Medium (32; 132; 132'; 132") unter Verwendung eines Wandlers einen Laserlichtstrahl nullter Ordnung von dem stabilisierten Laserlichtstrahl ausgibt;
Aufteilen eines abgetasteten Laserlichtstrahls vom Laserlichtstrahl nullter Ordnung unter Verwendung eines Strahlteilers stromabwärts des akusto-optischen Mediums; Erzeugen eines dem abgetasteten Laserlichtstrahl zugeordneten Rückkopplungssignals unter Verwendung eines Fotodetektors (37); und
Erzeugen eines Funkfrequenz-, RF, Steuersignals für den Wandler mit einem RF-Treiber (36; 136; 136'; 136"), so dass das Rauschen basierend auf dem Rückkopplungssignal auf den gebeugten Laserlichtstrahl erster Ordnung umgeleitet wird,
**gekennzeichnet durch**:
Stabilisieren des Laserlichtstrahls unter Verwendung eines Strahlstabilisators stromabwärts der Laserlichtquelle (31; 131; 131'; 131"), wobei der Wandler ein Phased-Array-Wandler ist, der eine Mehrzahl von Elektroden (34; 134; 134'; 134") umfasst, die mit dem akusto-optischen Medium (32; 132; 132'; 132") gekoppelt sind, und wobei das Funkfrequenz-Steuersignal für die Phased-Array-Wandlerelektroden (34; 134; 134'; 134") erzeugt wird, wobei das Stabilisieren von einem Strahlstabilisator (150; 150'; 150") durchgeführt wird, umfassend:
einen Positionsspiegel (151; 151'; 151"), der optisch mit dem Laserlichtstrahl von der Laserquelle (31; 131; 131'; 131") ausgerichtet ist;
einen Positionssensor (180; 180'; 180");
einen ersten Servomotor (152a; 152a'; 152a");
einen Winkelspiegel (153; 153'; 153"), der optisch mit dem Laserlichtstrahl von der Laserquelle (31; 131; 131'; 131") ausgerichtet ist;
einen Winkelsensor (157; 157'; 157");
einen zweiten Servomotor (152b; 152b'; 152b"); und
eine Servosteuerung (181; 181'; 181"),
wobei das Stabilisieren umfasst:
Bewegen des Positionsspiegels (151; 151'; 151") durch den ersten Servomotor (152a; 152a'; 152a");
Messen einer Positionsverschiebung des Laserlichtstrahls durch den Positionssensor (180; 180'; 180");
Betätigen des ersten Servomotors (152a; 152a'; 152a") durch die mit dem ersten Servomotor (152a; 152a'; 152a") gekoppelte Servosteuerung (181; 181'; 181") zum Stabilisieren des Laserlichtstrahls basierend auf dem Positionssensor (180; 180'; 180");
Bewegen des Winkelspiegels durch den zweiten Servomotor (152b; 152b'; 152b"); Messen einer Winkelverschiebung des Laserlichtstrahls durch den Winkelsensor (157; 157'; 157"); und
Betätigen des zweiten Servomotors (152b; 152b'; 152b") durch die mit dem zweiten Servomotor (152b; 152b'; 152b") gekoppelte Servosteuerung (181; 181'; 181") zum Stabilisieren des Laserlichtstrahls basierend auf dem Winkelsensor (157; 157'; 157"), wobei das Stabilisieren ein Stabilisieren einer Winkelverschiebung des Laserlichtstrahls und einer Positionsverschiebung des Laserlichtstrahls umfasst.

4. Verfahren nach Anspruch 3, wobei das Bewirken ein Ansteuern alternierender Elektroden der Phased-Array-Wandlerelektroden (34; 134; 134'; 134") mit verschiedenen Phasen umfasst.

## Revendications

1. Système laser (30 ; 130 ; 130') comprenant :
une source (31 ; 131 ; 131' ; 131") de laser configurée pour générer un faisceau de lumière laser ;
un modulateur acousto-optique (32 ; 132 ; 132' ; 132"), AOM, comprenant
un milieu acousto-optique (33 ; 133 ; 133' ; 133") configuré pour recevoir le faisceau de lumière laser, et
un transducteur configuré pour amener le milieu acousto-optique (33 ; 133 ; 133' ; 133") à délivrer en sortie un faisceau de lumière laser d'ordre zéro et un faisceau de lumière laser diffracté de premier ordre ;
un diviseur de faisceau (35 ; 154', 154") en aval de l'AOM (32 ; 132 ; 132' ; 132") et configuré pour séparer un faisceau de lumière laser échantillonné à partir du faisceau de lumière laser d'ordre zéro ;
un photodétecteur (37) configuré pour recevoir le faisceau de lumière laser échantillonné et générer un signal de rétroaction associé avec celui-ci ; et
un excitateur en radiofréquence, RF, (36 ; 136 ; 136' ; 136") configuré pour générer un signal d'excitation RF pour le transducteur de telle sorte qu'un bruit est dévié vers le faisceau de lumière laser diffracté de premier ordre sur la base du signal de rétroaction,
**caractérisé en ce que** le système laser (30 ; 130 ; 130') comprend en outre un stabilisateur (150 ; 150' ; 150") de faisceau en aval de la source (31 ; 131 ; 131' ; 131") de lumière laser, dans lequel le transducteur est un transducteur à commande de phase comprenant une pluralité d'électrodes (34 ; 134 ; 134' ; 134") couplées au milieu acousto-optique (33 ; 133 ; 133' ; 133") et l'excitateur en radiofréquence (36 ; 136 ; 136' ; 136") est configuré pour générer le signal d'excitation RF pour les électrodes (34 ; 134 ; 134' ; 134") de transducteur à commande de phase, dans lequel le stabilisateur (150 ; 150' ; 150") de faisceau comprend :
un miroir (151 ; 151' ; 151") de position optiquement aligné avec le faisceau de lumière laser depuis la source (31 ; 131 ; 131' ; 131") de laser ;
un premier servomoteur (152a ; 152a' ; 152a") configuré pour déplacer le miroir (151 ; 151' ; 151") de position ;
un capteur (180 ; 180' ; 180") de position configuré pour mesurer un déplacement positionnel du faisceau de lumière laser ;
un servocontrôleur (181 ; 181' ; 181") couplé au premier servomoteur (152a ; 152a' ; 152a") et configuré pour actionner le premier servomoteur (152a ; 152a' ; 152a") pour stabiliser le faisceau de lumière laser sur la base du capteur (180 ; 180' ; 180") de position ;
un miroir d'angle (153 ; 153' ; 153") optiquement aligné avec le faisceau de lumière laser depuis la source (31 ; 131 ; 131' ; 131") de laser ;
un deuxième servomoteur (152b ; 152b' ; 152b") configuré pour déplacer le miroir d'angle (153 ; 153' ; 153") ; et
un capteur d'angle (157 ; 157' ; 157") configuré pour mesurer un déplacement angulaire du faisceau de lumière laser,
dans lequel le servocontrôleur (181 ; 181' ; 181") est couplé au deuxième servomoteur (152b ; 152b' ; 152b") et configuré pour actionner le deuxième servomoteur (152b ; 152b' ; 152b") pour stabiliser le faisceau de lumière laser sur la base du capteur d'angle (157 ; 157' ; 157"),
dans lequel le stabilisateur (150 ; 150' ; 150") de faisceau est configuré pour corriger un déplacement positionnel du faisceau de lumière laser et pour corriger un déplacement angulaire du faisceau de lumière laser.

2. Système laser (30 ; 130 ; 130') selon la revendication 1, dans lequel l'excitateur RF (36 ; 136 ; 136' ; 136") est configuré pour exciter des électrodes alternées parmi les électrodes (34 ; 134 ; 134' ; 134") de transducteur à commande de phase avec différentes phases.

3. Procédé comprenant :
la génération d'un faisceau de lumière laser en utilisant une source (31 ; 131 ; 131' ; 131") de laser ;
le fait d'amener un milieu acousto-optique (32 ; 132 ; 132' ; 132") à délivrer en sortie un faisceau de lumière laser d'ordre zéro à partir du faisceau de lumière laser stabilisé en utilisant un transducteur ;
la division d'un faisceau de lumière laser échantillonné à partir du faisceau de lumière laser d'ordre zéro en utilisant un diviseur de faisceau en aval du milieu acousto-optique ;
la génération d'un signal de rétroaction associé avec le faisceau de lumière laser échantillonné en utilisant un photodétecteur (37) ; et
la génération d'un signal d'excitation en radiofréquence, RF, pour le transducteur avec un excitateur RF (36 ; 136 ; 136' ; 136") de telle sorte qu'un bruit est dévié vers le faisceau de lumière laser diffracté de premier ordre sur la base du signal de rétroaction, **caractérisé par** :
la stabilisation du faisceau de lumière laser en utilisant un stabilisateur de faisceau en aval de la source (31 ; 131 ; 131' ; 131") de lumière laser, dans lequel le transducteur est un transducteur à commande de phase comprenant une pluralité d'électrodes (34 ; 134 ; 134' ; 134") couplées au milieu acousto-optique (32 ; 132 ; 132' ; 132") et dans lequel le signal d'excitation en radiofréquence est généré pour les électrodes (34 ; 134 ; 134' ; 134") de transducteur à commande de phase, dans lequel une stabilisation est exécutée par un stabilisateur (150 ; 150' ; 150") de faisceau comprenant :
un miroir (151 ; 151' ; 151") de position optiquement aligné avec le faisceau de lumière laser depuis la source (31 ; 131 ; 131' ; 131") de laser ;
un capteur (180 ; 180' ; 180") de position ;
un premier servomoteur (152a ; 152a' ; 152a") ;
un miroir d'angle (153 ; 153' ; 153") optiquement aligné avec le faisceau de lumière laser depuis la source (31 ; 131 ; 131' ; 131") de laser ;
un capteur d'angle (157 ; 157' ; 157") ;
un deuxième servomoteur (152b ; 152b' ; 152b") ; et
un servocontrôleur (181 ; 181' ; 181"),
dans lequel la stabilisation comprend :
le déplacement, par le premier servomoteur (152a ; 152a' ; 152a"), du miroir (151 ; 151' ; 151") de position ;
la mesure, par le capteur (180 ; 180' ; 180") de position, d'un déplacement positionnel du faisceau de lumière laser ;
l'actionnement, par le servocontrôleur (181 ; 181' ; 181") couplé au premier servomoteur (152a ; 152a' ; 152a"), du premier servomoteur (152a ; 152a' ; 152a") pour stabiliser le faisceau de lumière laser sur la base du capteur (180 ; 180' ; 180") de position ;
le déplacement, par le deuxième servomoteur (152b ; 152b' ; 152b"), du miroir d'angle ;
la mesure, par le capteur d'angle (157 ; 157' ; 157"), d'un déplacement angulaire du faisceau de lumière laser ; et
l'actionnement, par le servocontrôleur (181 ; 181' ; 181") couplé au deuxième servomoteur (152b ; 152b' ; 152b"), du deuxième servomoteur (152b ; 152b' ; 152b") pour stabiliser le faisceau de lumière laser sur la base du capteur d'angle (157 ; 157' ; 157"),
dans lequel la stabilisation comprend la stabilisation d'un déplacement angulaire du faisceau de lumière laser et d'un déplacement positionnel du faisceau de lumière laser.

4. Procédé selon la revendication 3, dans lequel le fait d'amener comprend l'excitation d'électrodes alternées parmi les électrodes (34 ; 134 ; 134' ; 134") de transducteur à commande de phase avec différentes phases.
